# EUROPÄISCHE PATENTSCHRIFT

(11) **EP 1 251 957 B1**
(45) Veröffentlichungstag und Bekanntmachung des Hinweises auf die Patenterteilung: **17.03.2004**
(21) Anmeldenummer: 01900138.7
(22) Anmeldetag: 08.01.2001
(51) Int. Cl.: B01J 19/18, C08G 63/78, C08G 85/00

(54) **DISKONTINUIERLICHES POLYKONDENSATIONSVERFAHREN UND RÜHRSCHEIBENREAKTOR HIERFÜR**
BATCH POLYCONDENSATION METHOD AND A ROTATING DISC REACTOR THEREFOR
PROCEDE DISCONTINU DE POLYCONDENSATION ET REACTEUR A DISQUES AGITATEURS POUR SA REALISATION

(30) Priorität: 15.01.2000 DE 10001477
(43) Veröffentlichungstag der Anmeldung: 30.10.2002
(73) Patentinhaber: Zimmer Aktiengesellschaft, 60388 Frankfurt am Main (DE)
(72) Erfinder: WILHELM, Fritz, 61184 Karben (DE); FINKELDEI, Ferdinand, 60388 Frankfurt am Main (DE)
(86) Internationale Anmeldenummer: PCT/EP2001/000128
(87) Internationale Veröffentlichungsnummer: WO 2001/051199

(56) Entgegenhaltungen:
- DD-A- 52 942
- GB-A- 1 435 767
- US-A- 3 260 703
- US-A- 3 617 225
- DATABASE WPI Section Ch, Week 198229 Derwent Publications Ltd., London, GB; Class A23, AN 1982-60875E XP002164460 -& JP 50 157265 A (TEIJIN LTD), 19. Dezember 1975 (1975-12-19)

## Beschreibung

Die Erfindung bezieht sich auf ein Verfahren zur diskontinuierlichen Herstellung von Granulat aus Polykondensationspolymeren mit einer dynamischen Viskosität im Bereich von etwa 100 bis 1600 Pa.s bei der jeweiligen Polykondensationstemperatur durch Präkondensation eines niedermolekularen Oligomeren, bei einem Druck von 5 bis 400 mbar (abs.) in einem beliebigen Autoklaven, nachfolgende Polykondensation des Präkondensates in einem Rührscheibenreaktor mit horizontaler Achse und senkrechten Produkt-Schleppflächen sowie einem Austragsstutzen, einem Brüdenstutzen, mindestens einem Einfüllstutzen, und mindestens einem Rückführstutzen, und abschließendes Granulieren des Polykondensates.

Die Erfindung bezieht sich auch auf einen Rührscheibenreaktor mit horizontaler Achse und senkrechten Produkt-Schleppflächen sowie mindestens einem Einfüllstutzen, mindestens einem Rückführstutzen, einem Brüdenstutzen, einem Austrittsstutzen und Mitteln zur Beheizung des Reaktors für die diskontinuierliche Polykondensation eines Präkondensates zu einem Polykondensationspolymer mit einer dynamischen Viskosität im Bereich von etwa 100 bis 1600 Pa.s bei der jeweiligen Polykondensationstemperatur.

Prozesse und Reaktoren zur chargenweisen (diskontinuierlichen) Erzeugung von Kondensationspolymeren, insbesondere von Polyestern, in der Schmelzephase und die im Anschluß an die Polykondensation erfolgende Granulierung der Produktschmelzen sind bekannt. Die besondere Bedeutung des Batchprozesses liegt in seiner Flexibilität bezüglich veränderter Produktformulierungen und in einem verlustarmen Wechsel der Produktrezeptur. Bestehende Batchanlagen werden überwiegend zur Synthese von Polyethylenterephthalat (PET) und von Copolyestern auf Basis PET eingesetzt. Einer ersten Prozessstufe zur Erzeugung eines Präpolymeren (als Veresterungsprodukt beim Terephthalsäure-Verfahren oder als Umesterungsprodukt beim Dimethylterephthalat-Verfahren) folgt ein Rührautoklav zur Polykondensation des Präpolymeren unter Vakuum.
Die Rührautoklaven in konventionellen Anlagen sind stehende Reaktoren mit senkrechter Rührerwelle und speziellen, dem Behälterboden (in Halbkugel- oder Konusform) angepaßten Wendelrührern.

Die Nachteile dieser bekannten Rührautoklaven sind am Beispiel eines PET-Batchprozesses:
a) Batchgrößen von maximal 4 bis 6 t;
b) eine geometrisch begrenzte, spezifische Oberfläche von etwa 1,3 m²/t im Reaktor;
c) eine in der vertikalen Richtung limitierte Produktförderung (es dominiert die Rührerbewegung in der horizontalen Umfangsrichtung);
d) eine eingeschränkte Intensität des Stoffaustausches mit der praktischen Konsequenz längerer Reaktionszeiten, begrenzter Anlagenkapazitäten und Viskositäten (IV ≤ 0,66 dl/g), forcierter End-Betriebsvakua (höchstens 0,4 mbar abs.), einer wirtschaftlichen Fahrweise nur mit erhöhtem mechanischen Energieeintrag und gehobenen Polymerendtemperaturen (≥ 290 °C), Kapazitätseinbußen und Viskositätsbeschränkungen bei reduzierten Temperaturen oder Betriebsvakua, mit der Chargen- bzw. Anlagengröße zunehmende Polymerendtemperaturen;
e) gesteigerte Viskositätsschwankungen, z.B. ΔIV ≤ 0,03 dl/g bei IV = 0,65 dl/g, im Granulat infolge des thermischen Viskositätsabbaus der Schmelze während des Granuliervorganges sowie zusätzliche Regelabweichungen von ΔIV_{R} ≤ 0,01 dl/g in der Chargenfolge;
f) Polymerverluste von etwa 0,65 Gew. % beim regelmäßigen Freispülen des Austragssystems vor der Granulierung;
g) erhöhter Acetaldehyd-Gehalt und geminderte Farbqualität der PET-Polymere.

Zur Beschleunigung der Reaktion beim konventionellen Autoklaven ist eine Oberflächenvergrößerung bis zum 1,5-fachen Betrag durch eine Neigung der Behälterachse von bis zu 48° aus der Vertikalen vorgeschlagen worden (EP 0 753 344 A2). Bedenken gegen diese Maßnahme ergeben sich aber aus einer komplizierten, teuren Mechanik des Rührers und der Unsicherheit bei der Beherrschung von Querkräften und Unwuchten.

Bessere Möglichkeiten zur Steigerung der spezifischen Produktoberfläche (um einen Faktor von ca. 15 bis 30) und zu einer Erhöhung der Produktviskositäten lassen sich in einem liegenden Ringscheibenreaktor mit im wesentlichen in senkrechten Bahnen rotierenden Rührerschleppflächen und frei fallenden Filmen (Schleiern) innerhalb der Ringscheiben realisieren (US-Patente 3,499,873 und 3,617,225). Hauptproblem bei im Chargenbetrieb getesteten, zylindrischen Ringscheibenreaktoren war ein ungenügendes Entleerungsverhalten des Apparates. Dies trifft erst recht zu auf Ringscheibenreaktoren mit Kegelstumpfform und Produktaustritt in dem Reaktorbereich mit dem geringsten Durchmesser. Bei Reaktoren ohne Begehbarkeit bestehen auch Montageprobleme beim Trennblecheinbau. Die im US-Patent 4,540,774 beschriebenen Reaktoren mit von einem Käfig getragenen Ringscheiben sind nur für den kontinuierlichen Betrieb konzipiert.

Ein besseres Entleerungsverhalten zeigt das im DD-Patent 52942 beschriebene, sich an beiden Enden verjüngende Polykondensationsgefäß. Die schöpfkellenartigen Rührelemente begrenzen aber die Ausbildung freier Produktoberflächen und sind für höhere Viskositäten ungeeignet.

Hält man zugunsten hoher Polymerendviskositäten (z.B. IV ≤ 0,82 dl/g im Fall von PET) am Konzept eines Rührscheibenautoklaven mit einzelnen, durch Abstreifelemente getrennten Rührscheibenelementen fest (US-Patente 3,346,242 und 3,880,407), besteht eine weitere Problematik mit der bei geringen Zähigkeiten geminderten Intensität des Stoffaustausches an der Behälterwand und dem eingeschränkten Wärmeübergang. Unter technischen Produktionsbedingungen besteht bei einem relativen Füllniveau h/D = 0,4 und üblichen
Drehzahlen ≤ 8 UpM bei PET der Nachteil
- des Zwanges zur Präkondensatvorheizung auf etwa 280 °C,
- einer eingeschränkten Polykondensationsleistung mit maximal 7 Chargen pro Tag und
- einer geminderten Polymerfarbe und gesteigerter Viskositätsschwankungen.

Ziel der vorliegenden Erfindung ist es, die vorstehend genannten Nachteile zu minimieren, insbesondere das vorhandene Potential von Batchanlagen zu Vielzweckanlagen durch eine leistungsfähigere Polykondensationstechnik und eine gleichmäßigere Granulat-Qualität wesentlich zu verbessern.

Die Lösung dieser Aufgabe erfolgt erfindungsgemäß durch ein Verfahren und einen Rührscheibenreaktor gemäß den Angaben der Patentansprüche.

Die wesentlichen Merkmale der Erfindung sind:
(1) Vorevakuierung des Präkondensates in einem Vakuum von 5 bis 400 mbar, bei Polyester 30 bis 300 mbar, vorzugsweise 60 bis 240 mbar (abs.),
(2) Anwendung reduzierter Temperaturen,
(3) beschleunigte Auflösung des aus der vorangehenden Charge stammenden Restpolykondensates in der Polykondensatmischung im Reaktor und im äußeren Pumpenkreislauf durch zu Beginn der Polykondensation, im Vergleich zum Polykondensationsende, eine mindestens 2,5fach größere Startdrehzahl und entsprechend höhere Radialbeschleunigungen an den äußeren Schleppflächenkanten, die beim Rührscheibenreaktor mit wellengestützen Rührscheiben bevorzugt im Durchschnitt den Betrag der Erdbeschleunigung überschreiten,
(4) Aufbau eines Viskositätsprofils im Rührscheibenreaktor und Limitierung des Polymerrückstandes im Reaktor aufgrund der besonderen Reaktorgeometrie,
(5) Verkürzung der Polykondensationszeit im Standardprozess, z. B. bei PET auf ≤ 2,2 h und Batchzahlen von ≥ 8 pro Tag.

Die an ein fortschrittliches Batchverfahren gestellten Ziele eines beschleunigten Prozesses mit eingeschränkter Prozesstemperatur bei simultan vergrößerten Produktchargen, mit erhöhten Granulierzeiten zur Einschränkung der Granulatorleistung sowie der Forderung einer in weiten Grenzen variablen Viskosität der Polymerprodukte bei minimalen Viskositätsschwankungen werden erfindungsgemäß ermöglicht mit
(1) einer separaten Präkondensaterzeugung unter einem Vakuum von 5 bis 400 mbar bei limitierten Temperaturen, in einem beliebigen Autoklaven,
(2) der nachfolgenden Polykondensation des Präkondensates in einem speziell konzipierten, liegenden Rührscheibenreaktor mit einer Mehrzahl paralleler Rührscheiben als Träger senkrechter Schleppflächen und einer gemeinsamen horizontalen Drehachse, und
(3) der sich anschließenden Granulierung unter Aufrechterhaltung von Vakuum im Reaktor (etwa 10 - 100 mbar) und bei gemäßigten Produkttemperaturen.

Der erfindungsgemäße, diskontinuierliche Rührscheibenreaktor hat ein Gehäuse, welches von den Ein- und Austrittsstutzen abgesehen, in bezug auf die horizontale Behälterachse rotationssymmetrisch, im senkrechten Schnittbild kreisförmig und in Richtung einer oder beider Deckelseiten verjüngt ist. An einer oder beiden Deckelseiten ist ein Eintrittsstutzen und mindestens ein Rückführstutzen, wobei Eintrittsstutzen und Rückführstutzen auch identisch sein können, am Drainagetiefpunkt ein Austrittsstutzen und am Scheitelpunkt ein Brüdenabgang angeordnet. Entsprechend hat der Reaktor die Form eines liegenden, einseitig verjüngten Apparates, wahlweise mit zylindrischem Anschlußteil an der Seite mit dem größten Durchmesser, oder eines liegenden, zweiseitig verjüngten Apparates, wahlweise mit zylindrischem Zwischenstück. Die Verjüngung kann auf Basis kugelschichtförmiger oder elliptoidaler Gehäuselemente sphärisch gekrümmt oder anhand eines geraden Kegelstumpfes vorzugsweise konisch ausgebildet sein. Bei zweiseitiger Verjüngung kann die Verjüngung auf beiden Seiten identisch sein oder auch verschieden ausgebildet bzw. verschieden lang sein. Die konische oder gekrümmte Verjüngung kann auch durch entsprechende Einbauten in einem zylindrischen Gehäuse realisiert werden. Beheizt wird der Reaktor bevorzugt über ein in einem Heizmantel zirkulierendes Heizmedium.

Die Gestaltung der Rührscheibenelemente kann im allgemeinen mit unterschiedlichen Geometrien erfolgen. Prozessrelevant sind
a) die räumliche Schleppflächendichte, die zwischen 1 und 8 m²/m³, bevorzugt im Bereich von 3 bis 6,5 m² je m³ Reaktorraum im Bereich des Austragsstutzens des Reaktors liegt, bei stetigem Zuwachs mit zunehmender axialer Entfernung vom Austragsstutzen bis auf einen um 5 bis 35 %, bevorzugt um 10 bis 30 % höheren Wert in den axial entferntesten Bereichen (hierbei ist der Reaktorraum definiert als lokaler, differentieller Reaktorraum);
b) eine Konzentrierung der Schleppfläche auf die wandnahe, äußere Behälterzone;
c) freie Randzonen und/oder Unterbrechungen der äußeren Rührerkontur und/oder Ausführung einer durchlässigen (lochblech-, gitter- oder netzartigen) Struktur der Schleppflächen für den beschleunigten axialen (und radialen) Schmelzeabfluß beim Entleeren im Rührerstillstand;
d) eine Begrenzung der materiellen Projektionsfläche massiver Schleppflächen in axialer Richtung auf ca. 18 bis 45 % und perforierter Schleppflächen auf ca. 7 bis 33 % des Reaktorquerschnitts;
e) Halterung der Schleppflächen auf einer gemeinsamen Welle über einzelne Naben/Speichenverbindungen mit 2 bis 6 Speichen je Rührereinheit, oder alternativ an einem Käfig aus wahlweise 5 bis 9 Längstraversen entlang des Gehäusemantels und deckelseitiger Käfighalterungen an den äußeren Wellenenden unter Befestigung der Rührscheiben an den Käfigtraversen.

Bei Käfighalterung erhalten die Rührscheiben bevorzugt eine polygonartige Außenkontur oder eine Ringform mit radialen Vorsprüngen an den Befestigungspunkten. Eine Verbesserung des Entleerungsverhaltens wird mit perforierten Rührscheiben (Lochblech, Gitter oder Maschendraht) im Käfig anstelle von kompakten Schleppflächen erzielt. Bei der Ausführung mit Rührscheibenkäfig ist eine im wesentlichen konzentrische Anordnung von Behälterachse und Rotorachse vorgesehen, während bei parallelen Rührelementen auf gemeinsamer Welle, abhängig von der Rührscheibenkonstruktion, sowohl eine konzentrische als auch eine exzentrische Positionierung der Rührachse möglich ist.

Bezüglich der Reaktorkonzeption führt die Aufgabe einer weitgehenden, raschen Entleerung des Rührscheibenreaktors beim Granulieren im Vergleich zum Stand der Technik zu wesentlich verkürzten Baulängen und gesteigerten Durchmessern, entsprechend kurzen Fließwegen und einer minimalen Anzahl von Strömungsbarrieren. Beispielsweise ergeben sich für die apparativen Fälle, alle mit horizontaler Längsachse,
I: einseitig verjüngter Apparat mit Abfluß am Drainagetiefpunkt,
II: einseitig verjüngter Apparat mit zylindrischem Anschlußteil an der Seite mit größtem Durchmesser und Abfluß am Drainagetiefpunkt des zylindrischen Teils,
III: zweiseitig verjüngter Apparat mit zylindrischem Zwischenstück und Abfluß am zentralen Drainagetiefpunkt,
in bezug auf den nominellen bzw. maximalen Durchmesser D günstige Entleerungsbedingungen bei relativen Längen L entsprechend nachfolgender Tabelle 1:

**Tabelle 1:**

| **Appar. Fall** | **I** | **II** | **III** |
|---|---|---|---|
| L/D, maximum | < 1,0 | < 1,3 | < 1,8 |
| L/D, bevorzugt | ≤ 0,7 | ≤ 0,9 | ≤ 1,3 |

Bei gegebener Chargengröße zeitigt der Apparatetyp III den kleinsten Behälterdurchmesser und bietet für die Planung großer Kapazitäten die größten Reserven.

Ein weiteres wesentliches Merkmal des erfindungsgemäßen Verfahrens ist die gesteigerte Viskositätskonstanz im Granulat, die durch Kompensation des thermischen Viskositätsabbaus im Verlauf des Granulierens infolge der Etablierung eines entsprechenden Viskositätsgefälles zwischen dem Ort der Produktentnahme und den am weitesten vom Austrag entfernten Produktzonen im Rührscheibenreaktor während der Polykondensation realisiert wird. Anfänglich hat das zuletzt aus dem Reaktor fließende Polykondensat eine höhere Viskosität als das zuerst den Reaktor verlassende Produkt, diese wird aber im Verlauf der Granulierung durch den thermischen Abbau soweit verringert, daß während des gesamten Verlaufs der Granulierung näherungsweise viskositätskonstante Produktschmelze zur Granulierung gelangt. Der erfindungsgemäße Aufbau einer differentiell höheren Viskosität betrifft primär die axial entfernten Produktzonen, aber auch die zäheren Haftprodukte an den Rührscheiben, die nach Abschalten des Rührwerks verzögert abfließen und sich an der Sumpfoberfläche sammeln. Zusätzlich läßt sich das Ausmaß des Viskositätsabbaus im Reaktor während des Austragens der Polymerschmelze durch Anwendung eines Vakuumprogrammes während der Austragsphase beeinflussen.

Apparativ wird dieses Viskositätsprofil realisiert
- mit einer Mehrzahl paralleler, senkrechter Rührscheiben,
- mit ein- oder doppelseitigen Verjüngungen der Rührscheibenreaktoren an einer oder beiden Deckelseiten,
- mit einem örtlich abnehmenden, relativen Sumpfniveau h/D im verjüngten Bereich, gleichbedeutend einer in Richtung der Verjüngung vergrößerten spezifischen Produktoberfläche und Polykondensationsgeschwindigkeit an den Rührscheiben,
- durch eine mit wachsender Entfernung zum Produktaustrag sukzessiv vergrößerten Schleppflächendichte der Rührscheiben in den verjüngten Bereichen.

Besonders beim Apparatetyp III mit beidseitigen, verjüngten Abschlüssen, einem zylindrischen Zwischenstück und zentraler Tiefpunktdrainage lassen sich die zunächst widersprüchlichen Zielsetzungen einer verbesserten Viskositätskonstanz und einer effektiven Apparateentleerung bei liegendem Polykondensationsreaktor optimal vereinbaren.

Erfindungsgemäß besteht im Vergleich zur Produktablaufzone eine um 5 bis 35 %, vorzugsweise um 10 bis 30 % größere Schleppflächendichte in den axialen Außenbereichen. Dies kann durch unterschiedliche Abstände der Rührscheiben zueinander realisiert werden. Vorzugsweise wird bei einem konstanten, axialen Abstand zwischen den Rührscheiben im Bereich von 80 bis 180 mm die gesteigerte Schleppflächendichte in den verjüngten Reaktorzonen im wesentlichen mit einer relativ zum Durchmesser zunehmenden Rührscheibenbreite erreicht. Bei der Bestückung stärker verjüngter Apparate mit Ringscheiben genügt zur Vergrößerung der Schleppflächendichte im erwünschten Umfang eine konstante Ringscheibenbreite, unabhängig vom Durchmesser.

Der Neigungswinkel des Kegelstumpfes gegenüber der Horizontalen liegt erfindungsgemäß im Bereich von 5° bis 45°, vorzugsweise zwischen 10 und 30° beim einseitig konischen Reaktor und zwischen 20 und 38° beim doppelseitig konischen Reaktor.

Ein weiteres Merkmal des erfindungsgemäßen Verfahrens mit Rührscheibenreaktor ist die Maximierung der Polykondensationsleistung mit einer variablen, nicht durch Produktbrücken zwischen den Rührern limitierten Drehzahl und einer stetigen Oberflächenerneuerung der von den Schleppflächen transportierten, an den Rührscheiben ausgebreiteten und dem im Reaktor herrschenden Vakuum ausgesetzten Schmelzeanteile. Dieses Ziel ist im Fall des Rührscheibenreaktors mit durchgängiger Welle und parallelen, einzelnen Rührscheiben mit mittig zwischen die Rührscheiben geschalteten Trennblechen oberhalb des Produktsumpfes, etwa im Bereich der Reaktormitte, wo die rotierenden Rührscheiben aus dem Produktsumpf auftauchen, und mit einer als Verlängerung des Trennbleches bis in den Nahbereich der Welle geführten Quertraverse zum Abstreifen aller innen liegenden Schleppflächen, wie Speichen und Naben erreichbar. Diese Quertraverse begünstigt im übrigen ein verzögertes Kommunizieren des Produktes beim Rührerstillstand und die erfindungsgemäße Anreicherung zäherer Filmprodukte an der Sumpfoberfläche zu Beginn und während des Granuliervorgangs.

Anstelle von an einer Quertraverse befestigter Trennbleche können auch mantelseitig gehalterte, bis an die Rührerwelle reichende, sich vorzugsweise in Richtung der Welle verjüngende Trennbleche ohne Quertraverse, bevorzugt mit loser bis an die Welle geführter Nase verwendet werden. Derartige Trennbleche können beispielsweise nach der Montage der Rührelemente durch entsprechende Aussparungen in dem Reaktormantel von außen zwischen die Rührscheibenelemente geschoben werden und an der Wandung befestigt werden. Dies ist besonders von Vorteil bei nicht begehbaren Reaktoren, bei denen die Innenmontage problematisch ist.

Ein weiteres Merkmal des erfindungsgemäßen Prozesses ist die rasche reaktive Auflösung polymerer Restprodukte von der vorangehenden Charge im Rührscheibenreaktor durch anfänglich erhöhte Schergeschwindigkeiten an den Reaktorwänden und an den Rührscheiben im Bereich von 2,5 bis 250 s⁻¹, vorzugsweise von 10 bis 125 s⁻¹ während 15 bis 30 % der Gesamtpolykondensationsdauer zur Beschleunigung der Polykondensation und der Vermeidung von Produktverfärbungen. (Dabei sind die Schergeschwindigkeiten als Verhältnis der Rührerumfangsgeschwindigkeit zur lokalen Spaltweite definiert.)

Ein anderes Merkmal des erfindungsgemäßen Verfahrens mit Rührscheibenreaktor und wellengestützten Rührscheiben ist die Erzeugung und Aufrechterhaltung eines rückstandsfreien Brüdenraumes. Dieses Ziel wird erreicht durch separate Herstellung des Präkondensates unter einem Vakuum im Bereich von 5 bis 400 mbar bei begrenzten Temperaturen, sowie durch die relative Füllhöhe des Rührscheibenreaktors mit Präkondensat von h/D = 0,26 bis 0,49 (dem rechnerisch maximalen Füllniveau am Austragsstutzen, in erster Näherung ableitbar aus dem Verhältnis des Produktvolumens zum Reaktorvolumen im volumengleichen, zylindrischen Ersatzreaktor beim Nenndurchmesser D) und anfängliche erhöhte Mindestdrehzahlen, bei denen die Radialbeschleunigung an der äußeren Rührerberandung für eine anfängliche Dauer von etwa 15 bis 30 % der Gesamtpolykondensationsdauer, bei PET von ca. 20 bis 30 Minuten, und mindestens 5 mal höher als am Ende der Polykondensation vorzugsweise gleich oder größer der Erdbeschleunigung bei später fortschreitender Reduzierung eingestellt ist.

Die Herstellung von Produkten mit erhöhtem Molekulargewicht bzw. erhöhter Endzähigkeit wird erfindungsgemäß bei der Polykondensation durch ein eingeschränktes Füllniveau (h/D ≤ 0,35), vergrößerte freie Oberflächen, eine Einschränkung des Temperaturanstieges mit einem fortschreitend reduzierten Drehzahlniveau, eine in Grenzen verlängerte Polykondensationszeit und ein höheres Endvakuum getätigt.

Eine erfindungsgemäße Variante eines einseitig verjüngten Rührscheibenreaktors mit Käfighalterung und inneren Trennblechen wird erhalten, wenn anstelle üblicher Käfigreaktoren mit zweiseitigen Wellenaustritten, am Reaktorende mit dem größeren Durchmesser eine Innenlagerung mit festem Lagerzapfen erfolgt, an dessen Verlängerung ins Reaktorinnere die mindestens eine, vorzugsweise zwei Längstraversen verankert sind, über die in erhobener Position (ca. 8 bis 10 Uhr) Trennbleche zwischen die Rührscheiben geführt werden und optional in abgetauchter Position (ca. 16 bis 17 Uhr) dornförmige Abstreifer in Rührscheibennähe für eine verbesserte Mischtechnik angebracht sind. Mit dem Rührscheibenkäfig sind Produktförderung und Scherleistung in Umfangsrichtung entlang der Reaktorwand wesentlich erhöht, so daß beim Käfigreaktor im Vergleich zum Reaktorkonzept mit wellengestützten Rührscheiben ein auf ca. 25 bis 50 % reduziertes Drehzahlniveau resultiert.

Ein weiteres Merkmal des erfinderischen Verfahrens ist ein kostengünstiger Granulierprozeß mit Feinjustierung der Viskosität. Dies wird erreicht
- mit einer Austragspumpe zur kontrollierten Umwälzung der Produktschmelze vom Austragsstutzen über Zirkulationsleitungen zu den entfernten Deckelseiten (oder den daran unmittelbar anschließenden Mantelseiten) des Reaktors während der Polykondensation und in gedrosseltem Umfang während des Granulierens, sowie der wahlweisen Verwendung der Zirkulationsleitungen für eine anfängliche Erwärmung und spätere Kühlung der zirkulierten Polykondensatmischung,
- durch angepaßte Wahl der Polymerviskosität bei Beginn der Granulierung,
- durch Austrag der Polymercharge unter kontrolliertem, vorzugsweise in Funktion der Viskosität gesteuertem Vakuum im Reaktor (0,5 bis 150 mbar abs.),
- durch mäßige Produkttemperaturen während der Polykondensation und während des Granulierens, und
- vorzugsweise durch lokale Messung und Kontrolle der Viskosität, insbesondere zu Beginn und während des Granulierens.

Das Verfahren und der Rührscheibenreaktor gemäß der vorliegenden Erfindung eignen sich zur diskontinuierlichen Polykondensation in der Schmelzephase jeglicher Polykondensationspolymere, wie Polyester, Polycarbonate und die entsprechenden Copolymeren , wobei die dynamische Endviskosität, gemessen bei der jeweiligen Polykondensationstemperatur, im Bereich von etwa 100 bis 1600 Pa.s liegen sollte. Der erfindungsgemäße Reaktor kann auch zur Polykondensation hochviskoser Polyamide verwendet werden, wobei diese dann aber bei Normaldruck und die vorangehende Präkondensation bei Überdruck erfolgt. Höhere oder niedrigere Viskositäten sind möglich, die erfindungsgemäßen Vorteile sind aber weniger offensichtlich. Bevorzugt sind Polyester, wie Polyethylenterephthalat oder -naphthalat, Polytrimethylenterephthalat oder Polybutylenterephthalat und besonders bevorzugt Polyethylenterephthalat mit einer Intrinsic Viskosität im Bereich von 0,56 bis 0,82 dl/g entsprechend einer dynamischen Viskosität von 200 bis 1200 Pa·s.

Zusammenfassend ergeben sich im Vergleich zu konventionellen Batchverfahren für das erfindungsgemäße Verfahren mit Rührscheibenreaktor folgende Vorteile:
1. Erhöhte Prozeßqualität durch
   - reduzierte Temperaturen bzw. thermische Produktbelastungen während des gesamten Prozesses, insbesondere bei der Polykondensation und der Granulierung mit begrenzten Endtemperaturen, im Fall von Polyestern im Bereich von (T_{F}+10) bis (T_{F}+40)°C, wobei T_{F} die Schmelztemperatur des Polymeren ist,
   - signifikant reduzierte Prozeßverweilzeiten im Rührscheibenreaktor,
   - ständige, direkte Viskositätskontrolle in einem äußeren Produktkreislauf des Polykondensationsreaktors,
   - Batchaustrag unter Vakuum mittels Kreislaufpumpe,
   - Vermeidung schädlicher Rückstände durch eine rasche, reaktive Auflösung von Produktresten in der neuen Charge mit hinreichend hohen Zirkulationsraten (von etwa 3 Chargen pro Stunde) im äußeren Produktkreislauf, und reaktorintern mit maximalisierten Drehzahlen und Radialbeschleunigungen der senkrechten Schleppflächen während der anfänglichen Evakuierungsphase des Rührscheibenreaktors.
2. Verbesserte Wirtschaftlichkeit durch
   - gesteigerte Batchzahlen von z.B. bei PET 10 (± 2) Chargen anstelle von 5,75 (± 0,75) Chargen pro Tag in konventionellen Autoklaven,
   - Erhöhung der Batchgröße um das 2 bis 3fache und der Polymerkapazität um das 2 bis 5fache im Vergleich zu konventiellen Autoklaven,
   - reduzierte Endvakua von z. B. bei PET einem absoluten Druck von ≥ 0,6 mbar im Rührscheibenreaktor anstelle eines absoluten Druckes von ≤ 0,4 mbar beim konventionellen Verfahren,
   - mögliche längere Austragszeiten von z. B. ca. 42 min anstelle von 30 min bei gesteuertem Vakuum im Reaktor,
   - Verminderung der totraumbedingten Polymerverluste beim Granulieren durch erhöhte Batchgrößen und verlängerte Austragszeiten, erfindungsgemäß ohne Qualitätseinbußen,
   - geminderte Nebenproduktbildung und reduzierten Rohstoffeinsatz,
   - Polymeraustrag mittels Pumpe mit geringeren Betriebskosten als beim konventionellen Polymeraustrag mittels Stickstoffdruck.
3. Gesteigerte Polymerqualität durch
   - besonders hohe Konstanz der Polymerviskosität im Granulat,
   - minimale Polymerverfärbungen,
   - reduzierte Gehalte an Acetaldehyd bei der Produktion von Flaschen-Polyester;
4. Erhöhte Flexibilität mittels
   - Möglichkeit zur Steigerung der Viskosität, bei PET bis IV ≤ 0,82 dl/g.
   - Möglichkeit der alternativen Produktion anderer Polykondensations-Polymere.

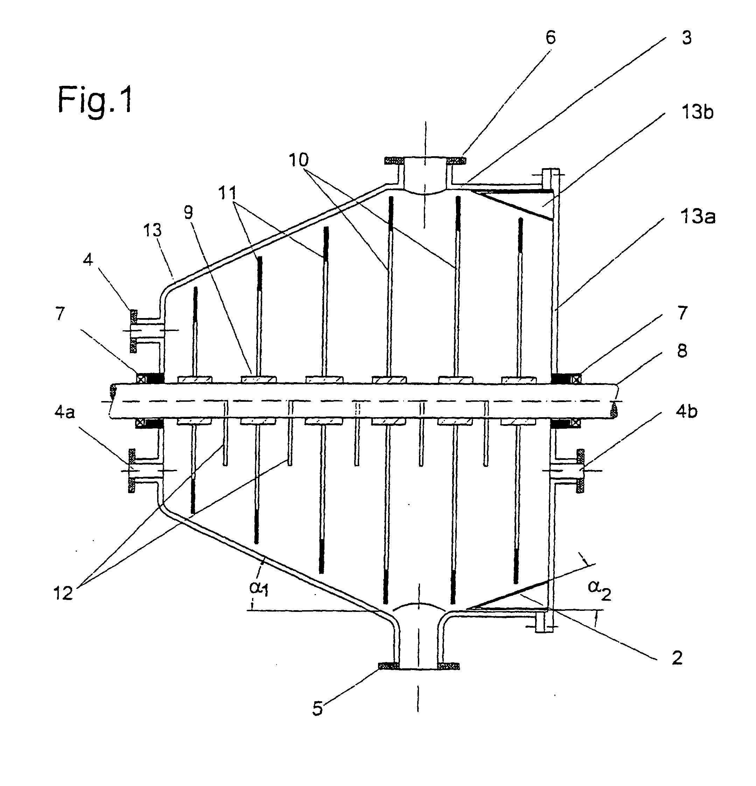

Der erfindungsgemäße Rührscheibenreaktor wird beispielhaft anhand der nachfolgenden schematischen Zeichnung näher erörtert, wobei
- **Fig. 1**: einen zweifach-konischen Rührscheibenreaktor mit zylindrischem Zwischenteil und auf einer axialen Welle gehalterten Rührscheiben im Längsschnitt,
darstellt.

Der in Fig. 1 dargestellte Reaktor besteht im wesentlichen aus einem liegenden Kegelstumpf (1) mit dem Neigungswinkel α₁, einem an den größeren Kegelstumpf-Durchmesser anschließenden zylindrischen Teil (3) gleichen Durchmessers und den Zwischenwänden (2), durch welche der dem Kegelstumpf (1) abgewandte Bereich des zylindrischen Teils (3) mit dem Neigungswinkel α₂ ebenfalls kegelstumpfförmig gestaltet wird. Beheizt werden kann der Reaktor über ein im Heizmantel (13, 13a, 13b) zirkulierendes Wärmeträgermedium. In den Seitenwänden ist der Präkondensat-Einlassstutzen (4) und im unteren Reaktorbereich der oder die Produkt-Austrittsstutzen (5) und am höchsten Punkt der Brüdenaustrittsstutzen vorgesehen. Statt des hier gezeigten seitlichen Einlaßstutzens, kann dieser auch im oberen Reaktorbereich neben dem Brüdenaustrittsstutzen mit oder ohne Prallblech angeordnet sein, was ein Spülen der oberen Reaktorwand ermöglicht. Die in den Wellendurchführungen (7) gegen die Atmosphäre abgedichtete und extern gelagerte, horizontale Rührerwelle (8) kann, je nach Geometrie der Rührerschleppflächen (11), konzentrisch oder leicht exzentrisch zur Reaktor-Längsachse angeordnet sein. An der Welle (8) sind die Rührscheiben (10) mit den Schleppflächen (11), beispielsweise über eine Naben-Speichen-Verbindung (9) gehaltert. Die Rührscheiben (10) sind mit gleichem Abstand zueinander angeordnet und haben einen der Reaktorform angepassten Durchmesser. Großer Durchmesser im Bereich des Drainage-Tiefpunktes und kleiner Durchmesser in dem verjüngten Reaktorbereich bei horizontaler Reaktor-Längsachse bedeuten bei konstanter Rührscheibenbreite eine höhere Schleppflächendichte im verjüngten Reaktorbereich und als Folge, in Verbindung mit anderen Maßnahmen, ein zäheres Polykondensat im verjüngten Reaktor-Bereich. Insbesondere bei Reaktoren mit kleinem Konusneigungswinkel α können die Rührscheiben (10) auch mit unterschiedlichen, mit wachsendem Reaktordurchmesser zunehmenden Abstand zueinander angeordnet werden. Mittig zwischen je zwei Rührscheiben (10) ist in Höhe der aus dem Produktsumpf auftauchenden Schleppflächen (11) bei rotierenden Rührscheiben (10), etwa in halber Reaktorhöhe je ein statisches Trennblech (12) angeordnet.

Alternativ kann der erfindungsgemäße Rührscheibenreaktor die Form eines liegenden, einfachen Kegelstumpfes (1) mit horizontaler Längsachse, einem Präkondensat-Einlaßstutzen (4), einem Brüdenaustrittsstutzen (6) und am Drainagetiefpunkt einen Produktaustrittsstutzen (5), aufweisen. Die nicht dargestellten Rührscheiben sind hier an Längstraversen befestigt, welche zusammen mit endständigen Speichen oder gelochten Platten einen rotierbaren Käfig bilden. Dieser Käfig hat die gleiche Form wie der Reaktor und ist gerade um so viel kleiner als dieser, dass das Produkt von den Reaktorwandungen abgestreift, aber nicht abgeschabt wird. Im Betriebszustand wird der Käfig einschließlich der Rührscheiben über eine Welle und ein Festlager in Rotation versetzt. Auf der der Welle gegenüberliegenden Seite wird der Käfig durch ein loses Innenlager mit in den Reaktor-Innenraum verlängertem Lagerzapfen getragen. Trennbleche und Abstreifer sind jeweils an mindestens einer Längstraverse befestigt, welche ein feststehendes Statorsystem bilden. Das Statorsystem weist eine feste Lagerung am Lagerzapfen und eine lose Lagerung, z.B. ein Gleitlager an der in den Innenraum ragenden Welle auf. Der radiale Abstand der ortsfesten Traversen von den Längstraversen des rotierbaren Käfigs orientiert sich am Innendurchmesser der Rührscheiben. Anstelle einzelner Statortraversen kann auch ein Gitter aus den Trennblechen mit 2 bis 4 Längsstäben eingesetzt werden. Mit dem Konzept des Innenlagers folgt zugleich eine einzelne Wellendurchführung mit integrierter Abdichtung.

Die Produktführung am Beispiel eines symmetrischen, beidseitig konisch verjüngten Reaktors mit von der Welle (8) getragenen Rührscheiben (10) und Trennblechen (12) kann wie folgt aussehen: Außerhalb des Reaktors ist ein nicht dargestelltes Ventil, eine Pumpe, ein Viskosimeter und eine Druckmessung angeordnet, die die Polykondensatmischung am Austrittsstutzen abführen und in die Produktrückführstutzen (4a) und (4b) wieder einleiten.

Die Welle (8) ist standardmäßig über ein nicht dargestelltes Festlager und ein inneres Gleitlager gehaltert. Zu Beginn wird das Präkondensat über den Stutzen (4) eingespeist. Über Aussparungen oder Perforierungen in den Rührscheiben verteilt sich das Präkondensat praktisch spontan über die gesamte Länge des Reaktors. Zum besseren Produktaustausch wird während der Polykondensation ständig am Austrittsstutzen (5) Polykondensatmischung entnommen und bei geschlossenem Ventil mit Hilfe der Pumpe über das Viskosimeter oder die Druckmessung und die Produktrückführstutzen (4a) und (4b) in die verjüngten Bereiche des Reaktors zurückgeführt. Je nach Reaktorgeometrie können die über die Stutzen (4a) und (4b) rückgeführten Produktmengen gleich groß oder verschieden sein, wobei die im Verlauf der Polykondensation insgesamt im Kreis geführte Menge etwa 200 bis 1000%, bevorzugt 300 bis 600 % der Gesamtcharge und die während der Granulierung im Kreis geführte Menge etwa 10 bis 30 % beträgt. Bei einseitig konischen Reaktoren entfällt der zweite Rückführstutzen. Die Zirkulationsleitungen sind beispielsweise mittels Mantelrohren als Wärmetauscher ausgebildet, mit denen eine gezielte Temperierung im Sinne einer anfänglichen Erwärmung und einer späteren Kühlung vorgenommen werden kann. Die während der Polykondensation entstehenden Brüden verlassen den Reaktor über den Stutzen (6) und gelangen dann zu einem nicht dargestellten Vakuumerzeuger. Nach beendeter Polykondensation wird die Rückführung des Polykondensationsgemisches stark, bis auf 10 bis 30 % der Gesamtcharge gedrosselt und der Rührer abgestellt, das Ventil in der Austrittsleitung geöffnet und als Polykondensat mit Hilfe der Pumpe aus dem Reaktor ausgetragen und einem Granulator zugeführt.

Eine alternative Bauform eines Rührscheibenreaktors sieht vor, die äußeren Schleppflächen (11) der Rührscheiben (10) exemplarisch als Ringscheiben unter Weglassung von Aussparungen oder Perforierungen zu gestalten.
Das Trennblech (12) kann mit einer nicht dargestellten Quertraverse beidseitig an der Reaktorwand (1) befestigt werden. Die Quertraverse ist dabei so angeordnet, dass einerseits das Trennblech (12) in dem Reaktorbereich, in dem die rotierenden Schleppflächen (11) aus dem Produktstumpf auftauchen, plaziert werden kann und andererseits ein Scheren und Abstreifen der Rührerwelle (8) und der Speichen der Rührscheiben möglich ist. Die Rührscheibe (10) kann leicht exzentrisch eingebaut werden, womit der Brüdendurchtritt im Scheitelbereich des Reaktors mit reduzierter Geschwindigkeit erfolgt. Der Produktionsaustrittsstutzen 5 am Behältergrund ist für einen effizienten Austrag erweitert.

Bei Wegfall der Speichen können die Schleppflächen (11) auch an den Längstraversen eines Käfigs, wie zuvor beschrieben, gehaltert werden. Die konventionelle Ringscheibe mit exzentrischer Rührschwelle beinhaltet durch den eingeschränkten Spalt zwischen dem Behälterboden und den glatten, geschlossenen Schleppflächen (11) ein reduziertes axiales Kommunikationsvermögen. Für einen ungehinderten Produktaustrag wird eine im Umkreis des Austrittstutzen (5) erweiterte Produktauslaufzone erforderlich. Im allgemeinen werden deshalb Schleppflächen (11) mit Perforierungen und/oder Aussparungen bevorzugt. Schleppflächen (11) in Form von Gitterscheiben oder Lochscheiben mit eingelassenen Fenstern oder Bohrungen in den äußeren Schleppflächen (11) zeigen ein verbessertes Kommunikations- und Leerlaufverhalten.

Neben Perforierungen des äußeren Schleppflächenbereichs ist, vorzugsweise mit einer konzentrischen Rührerposition, die Realisierung größerer Lücken zwischen Rührscheiben (10) und Gehäusewand (1) auf Basis einer Polygonstruktur möglich. Bei dieser Polygonstruktur wird im Hinblick auf eine stabile Filmbildung und eine pulsationsfreie Sumpfströmung die kreisförmige Rührerinnenkontur bevorzugt. Eine weitere Verbesserung ist ein erweiterter Ringspalt zwischen dem Behälterboden und den Schleppflächen (11), unterbrochen durch noppenartige Vorsprünge in Verbindung mit einer gezielten Leerlaufstellung des Rührwerkes. Eine Alternative bietet eine Kombination großer kreisförmiger Öffnungen im Zentrum der Rührscheibe (10) und halbkreisförmige Aussparung der Rührscheibe (10) zwischen Rührer und Reaktorwand.

In ein und demselben Rührscheibenreaktor können auch Rührscheiben unterschiedlicher Geometrie eingesetzt sein, zum Beispiel konventionelle Ringscheiben in den vom Austragsbereich entfernten Zonen und perforierte Rührscheiben im Austragsbereich. Vorzugsweise sind die Speichen der Rührscheiben eines Reaktors in axialer Richtung zueinander schraubenartig versetzt, so dass ein besserer axialer Produktaustausch möglich ist.

### Beispiele:

Die Geometrie der in den nachfolgenden Beispielen verwendeten Rührscheibenreaktoren ist aus Tabelle 2 ersichtlich.

**Tabelle 2:**

| **Versuchsanlage** | | | **A** | **B**¹⁾ | **C** |
|---|---|---|---|---|---|
| Reaktortyp nach Tab. 1 | | | II | | III |
| Vergleichsfall (gem. Fig.) | | | Fig. 1 | | Fig. 3 |
| Reaktorvolumen | V | [m³] | 0,78 | | 18,4 |
| Nenndurchmesser²⁾ | D | [mm] | 1278 | | 3280 |
| Relative Länge | L/D | [-] | | 0,59 | 0,76 |
| Längenanteile | | | | | |
| - zylindrischer Bereich | L_{z} | (%) | 24,2 | 33,6 | 42,4 |
| - 1. konischer Bereich | L_{K1} | (%) | 51,0 | 51,0 | 28,8 |
| - 2. konischer Bereich | L_{K2} | (%) | 24,8 | 15,4 | 28,8 |
| Konusneigungswinkel³⁾ | | | | | |
| - Konus (1) | α₁ | (grd) | 30° | 30° | 29° |
| - Verdrängerkonus oder Konus (2) | α₂ | (grd) | 30° | 45° | 29° |
| Lokale differentielle Schleppflächendichte (SFD)⁴⁾ = ΔA/ΔV | | [m²/m³] | | | |
| - im Austragsbereich, min SFD | | [m²/m³] | 7,87 | 6,07 | 5,14 |
| - am Konusende, max. SFD | | [m²/m³] | 9,73 | 7,40 | 6,23 |
| Rührscheibenkonzept | | | Ringscheiben | | Ringscheiben |
| Speichen je Rührscheibe | Zₛₚ | [-] | 3 | | 4 |
| RS-Bruttoabstand⁵⁾ | a | [mm] | 83 | 107 | 131 |

| | | | | | |
|---|---|---|---|---|---|
| ¹⁾ Anlage B ist eine Modifikation der Anlage A | | | | | |
| ²⁾ D = Dₘₐₓ | | | | | |
| ³⁾ gegenüber der Horizontalen | | | | | |
| ⁴⁾ definiert mit den axialen Projektionsflächen der Rührscheiben und Speichen (ohne Welle) | | | | | |
| ⁵⁾ Abstand Mitte Rührscheibe zu Mitte nächste Rührscheibe | | | | | |

### Beispiel 1:

In einer Pilotanlage wurden periodisch ca. 245 kg PET als Schmelze im diskontinuierlichen Veresterungs- und Polykondensationsverfahren, ausgehend von 212 kg Terephthalsäure (TPA) und 90 kg Ethylenglykol (EG) erzeugt und abzüglich der Anfahrverluste von 2 bis 2,5 % zu Granulat verarbeitet.

Vorpolykondensation und Polykondensation wurden in Anwesenheit von 180 ppm Sb und 10 ppm P durchgeführt, welche zuvor als Antimontriacetat bzw. als Phosphorsäure in glykolischer Lösung dem Prozeß zugeführt worden sind.

Temperatur und Druck der Vorpolykondensation endeten bei 276 °C und 60 mbar; Präpolymerproben zeigten einen TPA-Umsatz von 98,6 % und eine Intrinsic-Viskosität im Bereich IV = 0,165 bis 0,17 dl/g.

Das Präkondensat wurde mittels Stickstoffdruck in ca. 5 min in einen Rührscheibenautoklaven des Typs B gemäß Tabelle 2 überführt, welcher nach der Granulierung der Vorgängercharge und Schließen des Austragventils mit einem reduzierten Vakuum von ca. 250 mbar zur Batchaufnahme bereitgestellt wurde.

Besondere Merkmale des Polykondensationsprogrammes waren
- eine HTM-Flüssigbeheizung des Reaktors und der Produktkreislaufleitung mit 276 °C,
- ein konstanter, externer Produktkreislauf von 300 kg/h zwischen Auslaufstutzen und zentral gelegenem Rücklaufstutzen,
- Programmstart mit anfangs konstanter Rührscheibendrehzahl von 9 UpM bis zum Erreichen der Momentbegrenzung von 50 % des maximal verfügbaren Antriebsmomentes; anschließende Drehzahlreduzierung bei konstantem Führungsmoment bis zur Enddrehzahl von ca. 4 UpM,
- Druckabsenkung auf 1,1 mbar nach 60 min bzw. auf den Endwert von 0,8 mbar nach ca. 90 min,
- eine Prozess-Endtemperatur von 280 °C,
- Programmende nach 117 bis 120 min bei Erreichen eines Zieldruckes von ca. 40 bar in der Kreislaufleitung durch Abschalten des Rührwerkes und Übergang auf ein geringeres, stabilisierendes Vakuum von 25 mbar.

Die Granulierung der Produktschmelze begann nach dem Klarspülen des Schnitzelbypasses etwa 3 min nach dem Rührerstopp und beanspruchte ca. 38 min. Während der Granulierung reduzierte sich das Vakuum auf ca. 34 mbar.

Es wurden drei Schnitzelproben "S1", "S2" und "S3" nach der 2., der 17. bzw. der 32. Minute gezogen und auf die Gleichmäßigkeit der Intrinsic-Viskosität sowie auf den Carboxylendgruppengehalt der Mittelprobe untersucht. Die Ergebnisse waren:
- IV₁ = 0,640; IV₂ = 0,641; IV₃ = 0,641, jeweils in dl/g
- COOH = 22 eq/t (Probe S2)

Die erreichte Schmelzezähigkeit betrug ca. 380 Pa·s, das relative Füllniveau h/D = ca. 0,325.

Das anfängliche Schergeschwindigkeitsgefälle im Außenbereich des Rührers und der Reaktorwand bewegte sich im Bereich von ca. 5 bis 25 s⁻¹.

### Beispiel 2:

In einer Pilotanlage, vergleichbar mit der in Beispiel 1, wurden batchweise ca. 222 kg Polypropylenterephthalat (PTT) in Anwesenheit von 85 ppm Titan, zugegeben in Form von Tetrabutyltitanat, ausgehend von 180 kg Terepthalsäure (TPA) und 107 kg 1,3-Propandiol (PDO) als Schmelze hergestellt und mit ca. 95 % Ausbeute granuliert.

Nach der Veresterung wurde eine Vorpolykondensation mit einer Endtemperatur von 256 °C und einem Enddruck von 50 mbar vorgenommen. Das Präkondensat zeigte einen TPA-Umsatz von etwa 99,9 % und eine Intrinsic-Viskosität IV = ca. 0,17 dl/g.

Bei einer mit Beispiel 1 vergleichbaren Drehzahlsteuerung und Pumpenfördermenge für die äußere Produktzirkulation erfolgte die Polykondensation mit einem Vakuum von ca. 1,0 mbar nach 60 Minuten und einem End-Vakuum von 0,5 mbar nach ca. 150 Minuten. Es bestand eine stationäre HTM-Begleitheizung mit 254 °C. Bei Polykondensationsende nach ca. 156 Minuten war die Produkttemperatur auf 262 °C gestiegen und die Drehzahl von anfänglich 8,8 UpM auf 3,5 UpM gefallen.

3 Minuten nach der Rührerabschaltung begann die 33 Minuten währende Granulierung der Schmelze bei einem Reaktorvakuum von 0,5 mbar. Die Schitzelproben "S1" (nach zwei Minuten) und "S3" (nach 30 Minuten) zeigten gleiche Lösungsviskositäten, IV = 0,940 dl/g. Der Carboxylendgruppengehalt der Mittelprobe "S2" (nach 16 Minuten) wurde mit COOH = 11 eq/t bestimmt.
Die relative Füllhöhe nach dem Abstellen des Rührers errechnet sich mit h/D = ca. 0,30. Die dynamische Schmelzezähigkeit beim Batchende wurde mit ca. 350 Pa.s bestimmt.

### Beispiel 3:

In einer Versuchsanlage wurden im Umesterungs- und Polykondensationsverfahren unter Einsatz von 250 kg Dimethylterephthalat (DMT) und 151 kg 1,4-Butandiol (BDO) und der Verwendung von 45 ppm Ti als Tetraisopropyltitanat 283 kg Polybutylenterephthalat (PBT) hergestellt und granuliert.

Die Vorpolykondensation wurde mit einem Vakuum von 80 mbar bei 236 °C beendet. Das Präkondensat wurde mit einem DMT-Umsatz von 99,5 % und einer Lösungsviskosität IV = 0,16 dl/g zur weiteren Polykondensation in einen Rührscheibenreaktor des Typs A lt. Tabelle 2 überführt und polykondensiert.

Die wesentlichen Reaktionsparameter waren:
- eine Polykondensationsdauer von 170 min,
- eine über ca. 100 min konstante Drehzahl von 6,7 UpM und eine lineare Drehzahlabsenkung von 6,7 auf 1,2 UpM über eine weitere Stunde, danach eine konstant eingestellte Drehzahl von 1,0 UpM
- ein Vakuum von 1,5 mbar nach 60 min und ein Endvakuum von 1,2 mbar nach ca. 150 min,
- eine von 236 °C auf abschließend 251 °C gesteigerte Produkttemperatur,
- eine HTM-Begleittemperatur von 243 °C am Reaktormantel bzw. 240 °C an der äußeren Produktleitung,
- eine Produktumwälzleistung von 180 kg/h.

Die Granulierung erfolgte ca. 12 min nach der Rührerabschaltung unter einem Vakuum von 13 bis 20 mbar über eine Dauer von 40 min unter Gewinnung der Schnitzelproben S1 nach 3 min, S2 nach 19 min, S3 nach 35 min und der Meßergebnisse IV₁ = 1,01; IV₂ = 1,02; IV₃ = 1,02, jeweils in dl/g, COOH = 32 meq/kg (Probe S2).

Die rechnerische Auswertung zeigte
- ein relatives Füllniveau h/D = 0,38,
- ein anfängliches Schergeschwindigkeitsgefälle von ca. 4 bis 20 s⁻¹,
- eine dynamische Endzähigkeit des Polymers von ca. 480 Pa·s.

### Beispiel 4:

In der Versuchsanlage vom Typ A gem. Beispiel 3 wurden ausgehend von 225 kg DMT und 196 kg BDO unter Anwendung von 110 ppm Ti (als Tetraisopropyltitanat) 254 kg PBT-Schmelze periodisch hergestellt und abzüglich eines Verlustes von ca. 6 % granuliert.

Die Vorpolykondensation schloss mit einer Temperatur von 233 °C und einem Vorvakuum von 77 mbar ab.
Das Präpolymer wurde mit einem DMT-Umsatz von ca. 99,6 % und einer Intrinsic-Viskosität IV = 0,18 dl/g in den nachfolgenden Rührscheibenreaktor überführt und bei nachfolgenden Bedingungen polykondensiert:
- ansteigende Temperatur bis 244 °C,
- anfängliche und abschließende HTM-Temperatur von 255 °C bzw. 235 °C,
- Enddruck nach 150 min = 0,8 mbar,
- Polykondensationsdauer = 190 min,
- Eingangsdrehzahl = 5 UpM, bei einer Drehmomentbegrenzung auf 25 % abnehmend auf 0,26 UpM,
- Produktumwälzleistung von ca. 240 kg/h, abnehmend auf 120 kg/h

Die Granulierung erfolgte nach 10minütigem Rührerstillstand unter einem Reaktorvakuum von 0,8 mbar über 44 Minuten.

Die Analysenergebnisse der Schnitzelproben vom Anfang/Mitte/Ende der Granulierung betrugen
- IV₁ = 1,18; IV₂ = 1,18; IV₃ = 1,18, jeweils in dl/g,
- COOH = 57 eq/t (Probe S2)
Weitere Parameter waren:
- ein relatives Füllniveau, h/D = ca. 0,35,
- Produktendzähigkeit = ca. 1140 Pa.s,
- anfängliches Schergeschwindigkeitsgefälle im Rührscheibenbereich = ca. 6 bis 10 s⁻¹, im Wandbereich = ca. 3 bis 15 s⁻¹.

### Beispiel 5: (Vergleichsbeispiel)

In der Versuchsanlage gem. Beispiel 4 mit einem Rührscheibenreaktor vom Typ A gem. Tab. 2 wurden bei vergleichbaren Einsatzmengen und Füllbedingungen hochviskoses PBT im Umesterungsverfahren unter Einsatz von 55 ppm Ti (als Tetraisopropyltitanat) im PBT erzeugt.

Die Uorpolykondensation wurde mit 230 °C bei 55 mbar beendet; der DMT-Umsatz im Präkondensat betrug ca. 99,7 %, die Lösungsviskosität IV = ca. 0,17 dl/g.

Die bei der Polykondensation vorliegenden Bedingungen waren
- eine PK-Endtemperatur = 235 °C,
- ein Endvakuum = 1,0 mbar,
- Startdrehzahl = 5 UpM bei einer Drehmomentbegrenzung von 53 %, abnehmend auf 0,5 UpM,
- eine Polykondensationsdauer = 260 min,
- äußere Produktumwälzung von ca. 240 kg/h, abnehmend auf ca. 100 kg/h.

Die Granulierung erfolgte nach 10minütigem Rührerstillstand unter einem Reaktorvakuum von 1,0 mbar über 72 Minuten.

Die Analysenergebnisse der Schnitzelproben vom Anfang, der Mitte und am Ende der Granulierung betrugen:
- IV₁ = 1,21; IV₂ = 1,23; IV₃ = 1,36, jeweils in dl/g,
- COOH = 33 eq/t (Probe S2)

Die gemessenen Viskositäten des Vergleichsbeispiels 5 entsprachen einer im Verlauf der Granulierung ansteigenden Schmelzezähigkeit im Bereich
- η = ca. 1600 bis 2800 Pa.s.

Bei diesen außerhalb des erfindungsgemäßen Bereiches liegenden Endzähigkeiten war eine befriedigende Reaktorentleerung nicht möglich.

### Beispiel 6:

In einer Produktionsanlage wurden batchweise 7428 kg Copolyesterschmelze ausgehend von 6244 kg Terephthalsäure, 141 kg Isophthalsäure sowie 2836 kg Ethylenglykol und 37 kg Diethylenglykol erzeugt und zu 7,4 t Granulat verarbeitet. Als Katalysator gelangten, bezogen auf das Polymer, 250 ppm Sb als Antimontrioxyd (Sb₂O₃) zum Einsatz.

Die Vorkondensation wurde bei einer Endtemperatur von 278 °C und einem Vakuum von 250 mbar mit einem Säureumsatz von ca. 98,2 % und einer Lösungsviskosität IV = 0,157 dl/g ausgeführt.

Die Präkondensationscharge wurde innerhalb von maximal 5 Minuten in einem Rührscheibenreaktor des Typs C gemäß Tab. 2 transferiert.

Die Steuerung der Polykondensation erfolgte im wesentlichen auf Basis folgender Prozessparameter:
- einer konstanten Eingangsdrehzahl von 26 UpM über 27 Minuten, einer nahezu linearen Absenkung der Drehzahl innerhalb von 55 Minuten auf den stationären Endwert der Drehzahl von ca. 4,8 UpM,
- einer Vakuumsteigerung von ca. 200 mbar zu Anfang auf 1,1 mbar nach 30 Minuten und einen Endwert von 0,7 mbar nach 80 Minuten,
- einer Temperatursteigerung auf 279 °C nach 60 Minuten und 282 °C bei Batchende, nach 96 Minuten,
- einer äußeren Produktumwälzung in Längsrichtung vom zentralen Abfluß von ca. 24,8 t/h über 78 Minuten, linear abfallend auf einen konstanten Sollwert von 12,4 t/h nach 90 Minuten bei symmetrischer Aufteilung des Kreislaufes auf beide Deckelseiten,
- einer HTM-Begleitheizung des Reaktors mit ca. 276 °C über 60 Minuten, reduziert auf ca. 260 °C nach 80 Minuten,
- einer HTM-Begleitheizung der Zirkulationsleitung mit anfangs 276 °C über ca. 75 Minuten zurückgeführt auf ca. 260 °C nach ca. 90 Minuten.

Die Beendigung der Reaktion erfolgte mit dem Erreichen des Referenzdruckes in der Kreislaufleitung durch die Abschaltung des Rührwerkes und der Reduzierung des Vakuums auf ca. 30 mbar;

4 Minuten später begann die Granulierung, die nach 43 Minuten endete. Das Vakuum wurde bis zur halben Granulierdauer auf einen konstanten Endwert von ca. 75 mbar gemindert.

Zur Qualitätskontrolle wurden am Anfang, in der Mitte und am Ende der Granulierung 3 Schnitzelproben S1, S2, S3 gezogen und bezüglich der Lösungsviskosität und der Karboxylendgruppenkonzentration analysiert mit folgenden Ergebnissen:
- IV₁ = 0,631 IV₂ = 0,632 IV₃ = 0,632, jeweils in dl/g,
- COOH = 35 eq/t (Probe S2)

Weitere Parameter waren:
- ein Füllniveau h/D = 0,39,
- eine dynamische Produktzähigkeit von ca. 250 Pa·s,
- ein anfängliches Schergeschwindigkeitsgefälle im Bereich von ca. 30 bis 105 s⁻¹.

### Beispiel 7:

In der Produktionsanlage gemäß Beispiel 6 wurden mit einer dem Beispiel 6 vergleichbaren Prozessfahrweise im fortlaufenden Chargenzyklus Stichproben des Granulates als Mittelprobe "S2" entnommen und hinsichtlich der Lösungsviskosität untersucht.

Es ergaben sich folgende Ergebnisse:

| Batch No. | 1 | 4 | 7 | 10 |
|---|---|---|---|---|
| IV [dl/g] | 0,632 | 0,632 | 0,633 | 0,633 |
| COOH [eq/t] | 35 | 36 | 35 | 35 |

Die Bestimmung der Intrinsic-Viskosität erfolgte in den Beispielen 1, 2, 6, 7 anhand einer 0,5 %igen Lösung des Polymers bei 25 °C in o-Dichlorbenzol/Phenol im Mischungsverhältnis von 3 : 2 Gew.-Teilen. In den Beispielen 3, 4, 5 wurde anstelle von Orthodichlorbenzol Tetrachloräthan verwendet.

Die entsprechenden Schmelzeviskositäten wurden aus empirischen Tabellen der Schmelzeviskosität als Funktion von der Intrinsic Viskosität und der Produkttemperatur entnommen oder wurden direkt im Kegel/Platte-Rheometer bestimmt.

Die Bestimmung des Carboxylendgruppengehaltes erfolgte mit Hilfe der potentiometrischen Titration mit 0,05 molarer, methanolischer Kalilauge in o-Kresol/Chloroform (70 : 30 Gew.-Teile).

Der Monomerumsatz α im Veresterungsverfahren wurde aus der wie üblich durchgeführten Bestimmung von Säurezahl (SZ) und Verseifungszahl (VZ), jweils in mg KOH/g, in der Zuordnung α = 1 - (SZ/VZ) errechnet. Beim Umesterungsverfahren folgt der DMT-Umsatz aus der analogen Bestimmung der Methoxygruppenkonzentration m (in meq/g) in Relation zu den gesamten Gruppen, mₒ = f • VZ, welche mit dem Umrechnungsfaktor f = 0,01782 meq/mg KOH aus der Verseifungszahl abgeleitet wurden.

Die Analyse der Methoxygruppen erfolgte mittels Freisetzung des gebundenen Methanols durch alkalische Verseifung bei 150 °C im geschlossenen System und nachfolgende gaschromatographische Methanolbestimmung.

## Patentansprüche

1. Verfahren zur diskontinuierlichen Herstellung von Granulat aus Polykondensationspolymeren mit einer dynamischen Viskosität im Bereich von etwa 100 bis 1600 Pa.s bei der jeweiligen Polykondensationstemperatur durch Präkondensation eines niedermolekularen Oligomeren bei einem Druck von 5 bis 400 mbar (abs.) in einem beliebigen Autoklaven, nachfolgende Polykondensation des Präkondensates in einem Rührscheibenreaktor mit horizontaler Achse und senkrechten Produkt-Schleppflächen sowie einem Austragsstutzen, einem Brüdenstutzen, mindestens einem Einfüllstutzen und mindestens einem Rückführstutzen, und abschließendes Granulieren des Polykondensates, **dadurch gekennzeichnet, daß** die Polykondensation unter Vakuum bei einer Endtemperatur erfolgt, die 5 bis 50°C über dem Schmelzpunkt des erzeugten Polymeren liegt, wobei
a) das relative Füllniveau h/D des Reaktors bezogen auf den maximalen Durchmesser D im Bereich des Austragsstutzens gleich 0,26 bis 0,49 ist und in axialer Richtung mit zunehmendem Abstand vom Austragsstutzen abnimmt,
b) während der gesamten Dauer der Polykondensation ständig ein Teil der Polykondensationsmischung über den Austragsstutzen entnommen und dem Reaktor an mindestens einer vom Austragsstutzen entfernten Stelle wieder zugeführt wird,
c) die Schleppflächendichte im Bereich des Austragsstutzens 1 bis 8 m² je m³ Reaktorraum beträgt und mit wachsender axialer Entfernung vom Bereich des Austragsstutzen bis zur entferntesten Zone des Reaktors zunimmt, wobei die Zunahme 5 bis 35 % des niedrigsten Wertes beträgt,
d) während der Anfangsphase der Polykondensation die Schergeschwindigkeiten, denen das Polykondensationsgemisch ausgesetzt ist, 2,5 bis 250 s⁻¹ betragen und die Radialbeschleunigung an den äußeren Schleppflächenkanten mindestens 5 mal höher ist als am Ende der Polykondensation, wobei die Anfangsphase etwa 15 bis 30 % der gesamten Polykondensationsdauer beträgt,
e) die Bedingungen in a) bis d) so eingestellt werden, daß innerhalb des Reaktors zwischen der mindestens einen am entferntesten liegenden Zone und der Austragszone ein Viskositätsgefälle entsteht.

2. Verfahren nach Anspruch 1, **dadurch gekennzeichnet, daß** die Schleppflächendichte im Bereich des Austragsstutzen 3,0 bis 6,5 m²/m³ beträgt und in der vom Austragsstutzen am enferntesten liegenden Zone oder Zonen um 10 bis 30 % höher ist.

3. Verfahren nach Anspruch 1 oder 2, **dadurch gekennzeichnet, daß** die Schergeschwindigkeiten 10 bis 125 s⁻¹ betragen.

4. Verfahren nach einem der Ansprüche 1 bis 3, **dadurch gekennzeichnet**, das das Polykondensationspolymer ein Polyester mit mindestens 80 Mol-% Ethylenterephthalat-Einheiten und einer dynamischen Viskosität von 200 bis 1200 Pa•s ist, und die Polykondensation bei einem Enddruck von ≥ 0,6 mbar (abs.) und einer Endtemperatur von ≤ 285 °C erfolgt.

5. Rührscheibenreaktor mit horizontaler Achse und senkrechten Produkt-Schleppflächen sowie mindestens einem Einfüllstutzen, mindestens einem Rückführstutzen, einem Brüdenstutzen, einem Austrittsstutzen und Mitteln zur Beheizung des Reaktors für die diskontinuierliche Polykondensation eines Präkondensates zu einem Polykondensationspolymer mit einer dynamischen Viskosität im Bereich von etwa 100 bis 1600 Pa.s bei der jeweiligen Polykondensationstemperatur, **dadurch gekennzeichnet, daß**
a) das Reaktorgehäuse etwa die Form eines liegenden, einfachen oder doppelten, sich mit zunehmender Entfernung vom Austrittsstutzen verjüngenden Kegelstumpfes mit einem Wandneigungswinkel α im Bereich von 5 bis 45° oder des Stumpfes eines sphärisch verjüngten Rotationskörpers mit senkrechten Stirnflächen hat und sich wahlweise auf seiten des größeren Stumpfdurchmessers ein koaxialer zylindrischer Gehäuseteil anschließt, wobei der mindestens eine Rückführstutzen entfernt vom Austrittsstutzen liegt,
b) die Produkt-Schleppflächen aus einer Vielzahl zueinander paralleler, rotierbarer Rührscheiben bestehen, wobei die Schleppflächen auf den wandnahen, äußeren Reaktorbereich konzentriert sind und die Schleppflächendichte im Bereich des Austrittsstutzens 1 bis 8 m² je m³ Reaktorraum beträgt und mit wachsender axialer Entfernung vom Austrittsstutzen bis auf einen um 5 bis 35 % höheren Wert stetig zunimmt,
c) zwischen jeweils zwei Rührscheiben mindestens ein ortsfestes Trennblech angeordnet ist, und
d) der Austrittsstutzen über eine Produktpumpe und mindestens eine Zirkulationsleitung mit dem mindestens einen Rückführstutzen verbunden ist.

6. Rührscheibenreaktor nach Anspruch 5, **dadurch gekennzeichnet, daß** das Verhältnis der horizontalen Reaktorlänge L zum maximalen Reaktordurchmesser D bei doppelseitiger Verjüngung mit zylindrischem Zwischenteil kleiner als 1,8, bei einfacher Verjüngung mit zylindrischem Teil kleiner als 1,3 und bei einfachem Kegelstumpf ohne zylindrischen Teil kleiner als 1,0 ist.

7. Rührscheibenreaktor nach einem der Ansprüche 5 und 6, **dadurch gekennzeichnet, daß** die Rührscheiben auf gemeinsamer horizontalen Welle gehaltert sind.

8. Rührscheibenreaktor nach einem der Ansprüche 5 und 6 , **dadurch gekennzeichnet, daß** die Rührscheiben in einem der Reaktorform angepaßten Käfig aus mehreren Längstraversen gehaltert sind, wobei der Käfig eine stummelförmige Antriebswelle und auf der entgegengesetzten Seite ein Innenlager mit feststehendem Lagerzapfen aufweist, und die Trennbleche und Abstreifer zwischen den Rührscheiben auf mindestens einer Statortraverse im Käfiginnenraum befestigt sind, die auf dem Lagerzapfen fest und auf der Antriebswelle über ein Gleitlager schwimmend gelagert ist.

9. Rührscheibenreaktor nach Anspruch 8, **dadurch gekennzeichnet, daß** das Gleitlager mit dem Lagerzapfen über einen Torsionsstab verbunden ist.

10. Rührscheibenreaktor nach einem der Ansprüche 5 bis 9, **dadurch gekennzeichnet, daß** die Rührscheiben mit einem konstanten Abstand von 80 bis 180 mm zueinander angeordnet werden.

11. Rührscheibenreaktor nach einem der Ansprüche 5 bis 10, **dadurch gekennzeichnet, daß** die axiale Projektionsfläche der Schleppflächen etwa 7 bis 45 % des Reaktorquerschnitts beträgt.

12. Rührscheibenreaktor nach einem der Ansprüche 5 bis 11, **dadurch gekennzeichnet, daß** die Schleppflächendichte im Bereich des Austrittsstutzen 3,0 bis 6,5 m²/m³ beträgt und in dem oder den vom Austragsstutzen am enferntesten liegenden Bereich oder Bereichen um 10 bis 30 % höher ist.

13. Rührscheibenreaktor nach einem der Ansprüche 5 bis 7 und 10 bis 12, **dadurch gekennzeichnet, daß** er die Form eines liegenden, doppelten Kegelstumpfes mit zylindrischem Zwischenstück hat und eine durchgehende Welle mit parallelen Rührscheiben und an der Reaktorwand befestigte Trennbleche aufweist.

## Claims

1. A process for the discontinuous production of granules from polycondensation polymers with a dynamic viscosity in the range from about 100 to 1600 Pa.s at the respective polycondensation temperature by precondensation of a low-molecular oligomer at a pressure of 5 to 400 mbar (abs.) in any autoclave, subsequent polycondensation of the precondensate in a stirring reactor with horizontal axis and vertical product entraining surfaces as well as a discharge port, a vapour port, at least one filling port and at least one recirculation port, and final granulation of the polycondensate, **characterised in that** the polycondensation is effected under a vacuum at a final temperature which is 5 to 50°C above the melting point of the polymer produced, wherein
a) the relative filling level h/D of the reactor relative to the maximum diameter D is equal to 0.26 to 0.49 in the vicinity of the discharge port and decreases in the axial direction with increasing distance from the discharge port,
b) for the entire duration of the polycondensation part of the polycondensation mixture is constantly withdrawn via the discharge port and supplied again to the reactor at at least one point remote from the discharge port,
c) the entraining-surface density in the vicinity of the discharge port is 1 to 8 m² per m³ reactor space and increases with increasing axial distance from the region of the discharge port to the most remote zone of the reactor, the increase being 5 to 35% of the lowest value,
d) during the initial phase of the polycondensation the shear rates to which the polycondensation mixture is subjected are 2.5 to 250 s⁻¹, and the radial acceleration at the outer edges of the entraining surfaces is at least 5 times as high as at the end of the polycondensation, the initial phase being about 15 to 30% of the entire polycondensation time,
e) the conditions in a) to d) are adjusted such that inside the reactor a viscosity gradient is obtained between the at least one most remote zone and the discharge zone.

2. A process according to claim 1, **characterised in that** the entraining-surface density in the vicinity of the discharge port is 3.0 to 6.5 m²/m³ and 10 to 30% higher in the zone or zones most remote from the discharge port is.

3. A process according to claim 1 or 2, **characterised in that** the shear rates are 10 to 125 s⁻¹.

4. A process according to any of claims 1 to 3, **characterised in that** the polycondensation polymer is a polyester with at least 80 mole % ethylene terephthalate units and a dynamic viscosity of 200 to 1200 Pa.s, and the polycondensation is effected at a final pressure of ≥ 0.6 mbar (abs.) and a final temperature of ≤ 285°C.

5. A stirring reactor with horizontal axis and vertical product entraining surfaces as well as at least one filling port, at least one recirculation port, one vapour port, one outlet port and means for heating the reactor for the discontinuous polycondensation of a precondensate to obtain a polycondensation polymer with a dynamic viscosity in the range from about 100 to 1600 Pa.s at the respective polycondensation temperature, **characterised in that**
a) the reactor housing has approximately the shape of a lying, single or double truncated cone tapering with increasing distance from the outlet port with a wall angle of inclination α in the range from 5 to 45°, or the shape of a butt of a spherically tapered rotational body with vertical end faces, and a coaxial cylindrical housing portion selectively adjoins the side of the larger butt diameter, the at least one recirculation port being remote from the outlet port,
b) the product entraining surfaces consist of a plurality of mutually parallel rotatable stirring discs, the entraining surfaces being concentrated on the outer reactor region close to the wall, and the entraining-surface density in the vicinity of the outlet port is 1 to 8 m² per m³ reactor space and constantly increasing with increasing axial distance from the outlet port up to a value which is 5 to 35% higher,
c) at least one fixed baffle plate is disposed between two stirring discs each, and
d) the outlet port is connected with the at least one recirculation port via a product pump and at least one circulation line.

6. A stirring reactor according to claim 5, **characterised in that** in the case of a bilateral taper with cylindrical intermediate portion the ratio of the horizontal reactor length L to the maximum reactor diameter D is smaller than 1.8, in the case of a unilateral taper with cylindrical portion smaller than 1.3 and in the case of a simple truncated cone without cylindrical portion smaller than 1.0.

7. A stirring reactor according to any of claims 5 and 6, **characterised in that** the stirring discs are held on a common horizontal shaft.

8. A stirring reactor according to any of claims 5 and 6, **characterised in that** the stirring discs are held in a cage adapted to the reactor shape and comprising a plurality of longitudinal girders, where the cage has a stub-shaped drive shaft and on the opposite side an internal bearing with stationary bearing pin, and the baffle plates and scrapers are mounted between the stirring discs on at least one stator girder in the interior of the cage, which stator girder is firmly mounted on the bearing pin and floatingly mounted on the drive shaft via a slide bearing.

9. A stirring reactor according to claim 8, **characterised in that** the slide bearing is connected with the bearing pin via a torsion bar.

10. A stirring reactor according to any of claims 5 to 9, **characterised in that** the stirring discs are arranged with a constant distance of 80 to 180 mm from each other.

11. A stirring reactor according to any of claims 5 to 10, **characterised in that** the axial projection surface of the entraining surfaces is about 7 to 45% of the reactor cross-section.

12. A stirring reactor according to any of claims 5 to 11, **characterised in that** in the vicinity of the outlet port the entraining-surface density is 3.0 to 6.5 m²/m³ and is 10 to 30% higher in the region or regions most remote from the outlet port.

13. A stirring reactor according to any of claims 5 to 7 and 10 to 12, **characterised in that** it has the shape of a lying, double truncated cone with cylindrical intermediate piece and a continuous shaft with parallel stirring discs and baffle plates attached to the reactor wall.

## Revendications

1. Procédé discontinu de production de granulés de polymère de polycondensation ayant une viscosité dynamique de l'ordre d'environ 100 à 1600Pa.s à la température de polycondensation respective par précondensation d'un oligomère de bas poids moléculaire sous une pression de 5 à 400 mbars (absolue) dans un autoclave quelconque, suivie d'une polycondensation du produit précondensé dans un réacteur à disques d'agitation ayant un axe horizontal et des surfaces d'entraînement du produit qui sont verticales, ainsi qu'une tubulure de déchargement, une tubulure pour les vapeurs, au moins une tubulure de chargement et au moins une tubulure de recyclage, et par granulation finale du produit polycondensé, **caractérisé en ce que** la polycondensation s'effectue sous vide à une température finale qui est supérieure de 5 à 50°C au point de fusion du polymère produit, dans lequel
a) le niveau h/D relatif de remplissage du réacteur rapporté au diamètre D maximum dans la partie de la tubulure de déchargement est compris entre 0,26 et 0,49 et diminue en direction axiale au fur et à mesure que l'on s'éloigne de la tubulure de déchargement,
b) pendant toute la durée de la polycondensation, on prélève en permanence une partie du mélange de polycondensation par la tubulure de déchargement et on la retourne au réacteur en au moins un point éloigné de la tubulure de déchargement,
c) la densité des surfaces d'entraînement dans la partie de la tubulure de déchargement est de 1 à 8 m² par m³ d'espace du réacteur et augmente au fur et à mesure que l'on s'éloigne axialement de la partie de la tubulure de déchargement jusqu'à la zone la plus éloignée du réacteur, l'augmentation représentant de 5 à 35 % de la valeur la plus petite,
d) pendant la phase initiale de la polycondensation, les vitesses de cisaillement auxquelles le mélange de polycondensation est soumis sont de 2,5 à 250 s⁻¹ et l'accélération radiale sur les bords extérieurs des surfaces d'entraînement est au moins cinq fois plus grande qu'à la fin de la polycondensation, la phase initiale représentant environ de 15 à 30 % de la durée totale de la polycondensation,
e) on règle les conditions dans a) à d) de façon à créer à l'intérieur du réacteur un gradient de viscosité entre la au moins une zone la plus éloignée et la zone de déchargement.

2. Procédé suivant la revendication 1, **caractérisé en ce que** la densité des surfaces d'entraînement dans la partie de la tubulure de déchargement est comprise entre 3,0 et 6,5 m²/m³ et est plus grande de 10 à 30 % dans la zone ou dans les zones qui sont les plus éloignées de la tubulure de déchargement.

3. Procédé suivant la revendication 1 ou 2, **caractérisé en ce que** les vitesses de cisaillement sont comprises entre 10 et 125 s⁻¹.

4. Procédé suivant l'une des revendications 1 à 3, **caractérisé en ce que** le polymère de polycondensation est un polyester ayant au moins 80 % en moles de motifs téréphtalate d'éthylène et une viscosité dynamique de 200 à 1200 Pa.s, et la polycondensation s'effectue à une pression finale ≥ 0,6 mbar (absolue) et à une température finale ≤ 285°C.

5. Réacteur à disques d'agitation ayant un axe horizontal et de surface d'entraînement du produit qui sont verticaux, ainsi qu'au moins une tubulure de remplissage, au moins une tubulure de recyclage, une tubulure pour les vapeurs, une tubulure de déchargement et des moyens de chauffage du réacteur pour la polycondensation en discontinu d'un produit précondensé en un polymère de polycondensation d'une viscosité dynamique de l'ordre d'environ 100 à 1600 Pa.s à la température respective de polycondensation, **caractérisé en ce que**
a) l'enveloppe du réacteur a à peu près la forme d'un tronc de cône horizontal, simple ou double, se rétrécissant au fur et à mesure que l'on s'éloigne davantage de la tubulure de déchargement et ayant un angle α d'inclinaison de la paroi de l'ordre de 5 à 45° ou du tronc d'un corps de révolution se rétrécissant sphériquement ayant des surfaces frontales verticales et il se raccorde au choix du côté du grand diamètre du tronc, une partie cylindrique coaxiale de l'enveloppe, la au moins une tubulure de recyclage étant éloignée de la tubulure de déchargement,
b) les surfaces d'entraînement du produit sont constituées d'une pluralité de disques d'agitation parallèles entre eux et tournants, les surfaces d'entraînement étant concentrées sur la partie extérieure du réacteur proche de la paroi et la densité des surfaces d'entraînement dans la partie de la tubulure de déchargement représentant de 1 à 8 m² par m³ de l'espace du réacteur et augmentant constamment au fur et à mesure que l'on s'éloigne axialement de la tubulure de déchargement jusqu'à une valeur plus grande de 5 à 35 %,
c) il est monté entre respectivement deux disques d'agitation au moins une tôle de séparation à poste fixe, et
d) la tubulure de sortie communique par l'intermédiaire d'une pompe pour du produit et d'au moins un conduit de mise en circulation avec la au moins une tubulure de recyclage.

6. Réacteur à disques d'agitation suivant la revendication 5, **caractérisé en ce que** le rapport de la longueur L horizontale du réacteur au diamètre D maximum du réacteur est, pour un rétrécissement des deux côtés avec partie intermédiaire cylindrique inférieure à 1,8, pour un rétrécissement simple avec partie cylindrique inférieure à 1,3 et pour un tronc de cône simple sans partie cylindrique, inférieur à 1,0.

7. Réacteur à disques d'agitation suivant l'une des revendications 5 et 6, **caractérisé en ce que** les disques d'agitation sont montés sur un arbre horizontal commun.

8. Réacteur à disques d'agitation suivant l'une des revendications 5 et 6, **caractérisé en ce que** les disques d'agitation sont maintenus dans une cage adaptée à la forme du réacteur et constituée de plusieurs traverses longitudinales, la cage ayant un arbre d'entraînement en forme de bout et ayant du côté opposé un palier intérieur à tourillon de palier fixe, et les tôles de séparation et des racleurs sont fixés entre les disques d'agitation sur au moins une traverse de stator à l'intérieur de la cage, traverse qui est montée fixe sur le tourillon de palier et flottante sur l'arbre d'entraînement par un palier glissant.

9. Réacteur à disques d'agitation suivant la revendication 8, **caractérisé en ce que** le palier glissant est relié au tourillon de palier par une barre de torsion.

10. Réacteur à disques d'agitation suivant l'une des revendications 5 à 9, **caractérisé en ce que** les disques d'agitation sont disposés à un intervalle constant de 80 à 180 mm les uns par rapport aux autres.

11. Réacteur à disques d'agitation suivant l'une des revendications 5 à 10, **caractérisé en ce que** la surface axiale de projection des surfaces d'entraînement représente environ de 7 à 45 % de la section transversale du réacteur.

12. Réacteur à disques d'agitation suivant l'une des revendications 5 à 11, **caractérisé en ce que** la densité des surfaces d'entraînement dans la partie de la tubulure de déchargement est comprise entre 3,0 et 6,5 m²/m³ et est plus grande de 10 à 30 % dans la ou dans les parties la plus éloignée ou les plus éloignées de la tubulure de déchargement.

13. Réacteur à disques d'agitation suivant l'une des revendications 5 à 7 et 10 à 12, **caractérisé en ce qu'**il a la forme d'un tronc de cône horizontal double à pièce intermédiaire cylindrique et comporte un arbre continu ayant des disques d'agitation qui sont parallèles et des tôles de séparation qui sont fixées à la paroi du réacteur.
